# EUROPEAN PATENT SPECIFICATION

(11) **EP 4 553 354 B1**
(45) Date of publication and mention of the grant of the patent: **28.01.2026**
(21) Application number: 24191613.9
(22) Date of filing: 30.07.2024
(51) Int. Cl.: F16K 15/20

(54) **AIR PUMP CONNECTOR HEAD**
VERBINDUNGSKOPF FÜR EINE LUFTPUMPE
TÊTE DE RACCORD DE POMPE À AIR

(30) Priority: 13.11.2023 TW 112143685
(43) Date of publication of application: 14.05.2025
(73) Proprietor: Co-Luck Enterprise Co., Ltd., Dali Dist. Taichung City 41263 (TW)
(72) Inventor: WU, Scott, 41263 Taichung City (TW)
(74) Representative: Michalski Hüttermann & Partner Patentanwälte mbB

(56) References cited:
- DE-B3- 102016 105 438
- US-A- 6 146 116
- US-B1- 10 247 319

## Description

### BACKGROUND OF THE INVENTION

The present invention relates to an air pump connector head and, particularly to an air pump connector head that can be operated single-handedly.

TW Patent No. M318073 discloses an air pump head comprising an assembly hole and an interconnected conduit. At the top of the assembly hole is a handle, and at the bottom is a nozzle compatible with American valves. Additionally, the assembly hole comprises a clamp compatible with French valves at the top of the nozzle, with the clamp having a downward-constrained guiding hole at its top. Between the clamp and the handle, an adapter is positioned in the assembly hole, with a return spring positioned between the adapter and the clamp. At the bottom of the adapter, an active claw corresponds to the guiding hole, housing a needle connected to a spring inside the adapter. When the handle moves the adapter downwards, the active claw forces the nozzle to deform, gripping the American valves or French valves, ensuring effective inflation. US10 247 319, DE10 20 16 10 54 38 or US6 146 116 also disclose air pump connector heads.

However, using this pump head requires inserting a valve from an object to be inflated into the pump head and then lifting the handle to a secure it. This process demands simultaneous manipulation of the valve, pump head, and handle positions, which can be notably inconvenient during operation.

The present invention is, therefore, intended to obviate or at least alleviate the problems encountered in the prior art.

### SUMMARY OF THE INVENTION

In accordance with the present invention, an air pump connector head comprises a shell having a connecting end and an operating end and including a cavity extending from the connecting end to the operating end. The shell includes an air passage communicating with the cavity. A stop section is disposed at the connecting end. A tightening mechanism comprises at least one sealing ring and a compressing plunger. The at least one sealing ring is arranged between the stop section and the compressing plunger and is elastically deformable upon movement of the compressing plunge to clamp a valve. The compressing plunger is movably disposed in the cavity. A handle has a joint section, an operation section, and a first locking section. The joint section is pivotally connected to the operating end and is operatively connected to the compressing plunger to cause relative movement of the compressing plunger with respect to the cavity, thereby elastically deforming the at least one sealing ring. A limiting component has a pressing section and a second locking section. The second locking section is detachably engageable with the first locking section. A biasing component is arranged between the limiting component and the shell configured to bias the limiting component.

Other objectives, advantages, and new features of the present invention will become apparent from the following detailed description of the invention when considered in conjunction with the accompanied drawings.

### BRIEF DESCRIPTION OF DRAWINGS

FIG. 1 is a perspective view of an air pump connector head in accordance with a first embodiment of the present invention.
FIG. 2 is an exploded perspective view of the air pump connector head shown in FIG. 1.
FIG. 3 is a sectional view of the air pump connector head shown in FIG. 1, in which an air seal ring is in a compressed state.
FIG. 4 is a sectional view of the air pump connector head shown in FIG. 1, in which, in which the air seal ring is in a relaxed state.
FIG. 5 is a perspective view of an air pump connector head in accordance with a second embodiment of the present invention.
FIG. 6 is an exploded perspective view of the air pump connector head shown in FIG. 5.
FIG. 7 is a sectional view of the air pump connector head shown in FIG. 5, in which an air seal ring is in a compressed state.
FIG. 8 is a sectional view of the air pump connector head shown in FIG. 5, in which, in which the air seal ring is in a relaxed state.
FIG. 9 is a perspective view of an air pump connector head in accordance with a third embodiment of the present invention.
FIG. 10 is an exploded perspective view of the air pump connector head shown in FIG. 9.
FIG. 11 a sectional view of the air pump connector head shown in FIG. 9, in which an air seal ring is in a compressed state.
FIG. 12 is a sectional view of the air pump connector head shown in FIG. 9, in which, in which the air seal ring is in a relaxed state.
FIG. 13 is a perspective view of an air pump connector head in accordance with a fourth embodiment of the present invention.
FIG. 14 is a perspective view of an air pump connector head in accordance with a fifth embodiment of the present invention.

### DETAILED DESCRIPTION OF THE INVENTION

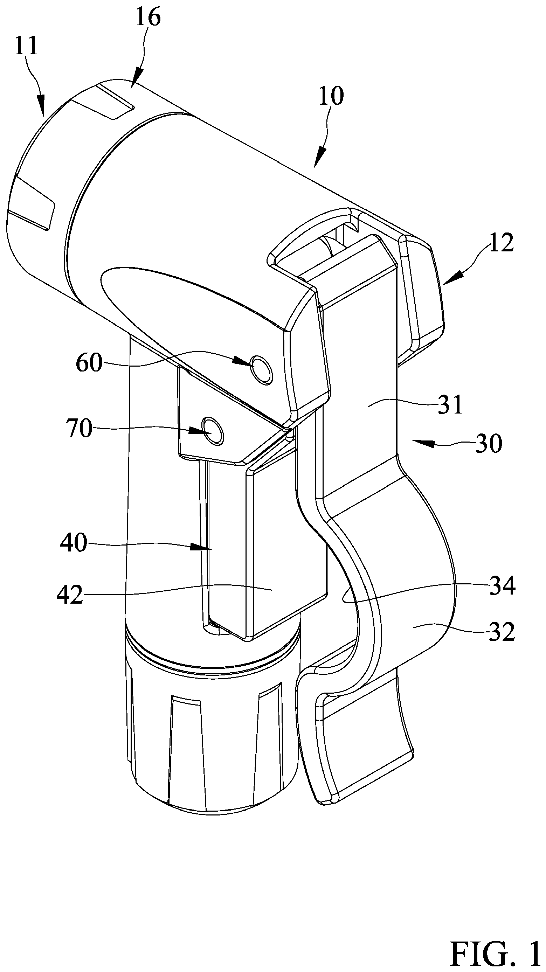

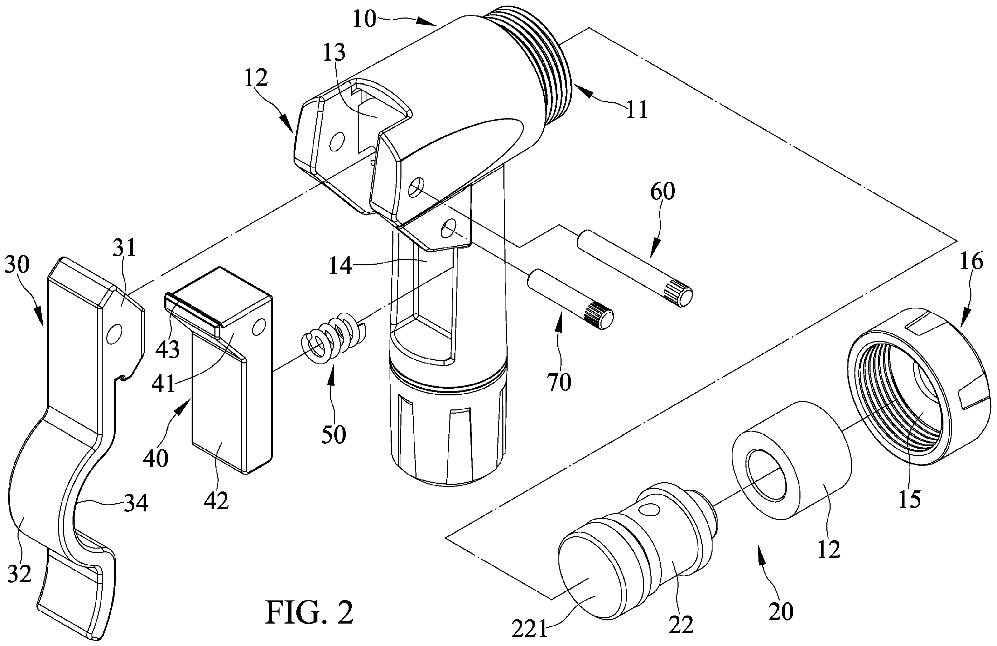

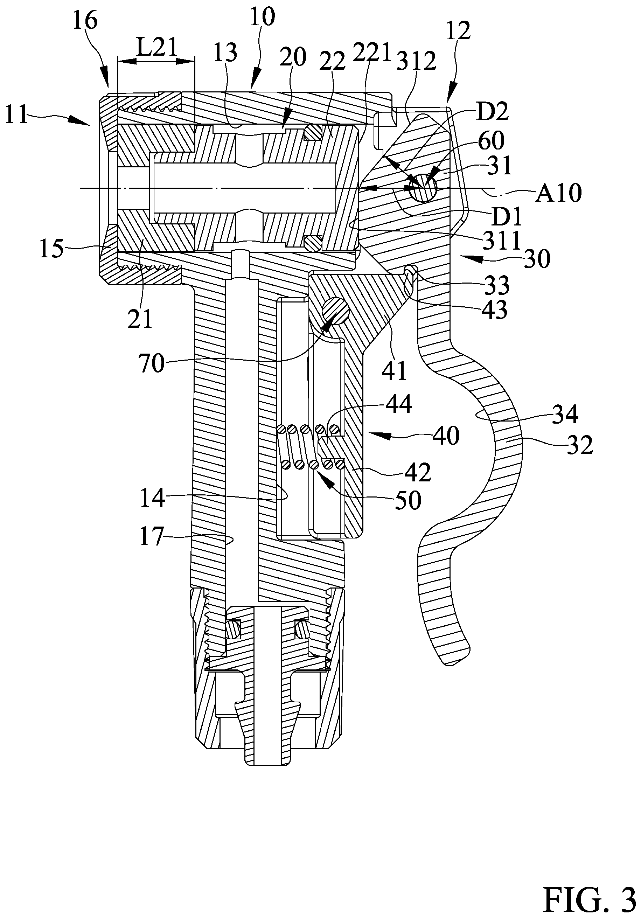

FIGS 1 to 4 show an air pump connector head in accordance with a first embodiment of the present invention. The air pump connector head is designed to fluidly connect to a valve of an object to be inflated. The air pump connector head comprises a shell 10, a tightening mechanism 20, a handle 30, a limiting component 40, and a biasing component 50.

The shell 10 has a connecting end 11 to an operating end 12. A cavity 13 extends axially along an axis A10 from the connecting end 11 to the operating end 12. At the operating end 12, a groove 14 communicates with the cavity 13. A stop section 15 is positioned at the connecting end 11 and prevents components exiting the cavity 13. A cap 16 is threaded onto the connecting end 11. The stop section 15 is formed on the cap 16. An air passage 17 communicates with the cavity 13.

The tightening mechanism 20 comprises at least one sealing ring 21 and a compressing plunger 22. The compressing plunger 22 is movably disposed in the cavity 13. The at least one sealing ring 21 is positioned between the stop section 15 and the compressing plunger 22 within the cavity 13. The at least one sealing ring 21 includes one end abutting against the stop section 15 and the other end abutting against the compressing plunger 22, thereby allowing the compressing plunger 22 to directly squeeze and elastically deform the at least one sealing ring 21 to clamp onto the valve.

The at least one sealing ring 21 is elastomeric and deformable so as to conform tightly around various valve types when compressed by the compressing plunger 22. The at least one sealing ring 21 is elastically deformable upon movement of the compressing plunger 22 to clamp the valve. The compressing plunger 22 has an abutment surface 221 located adjacent to the operating end 12 abutting against the handle 30.

The handle 30 is ergonomically designed. The handle 30 is pivotal and has a joint section 31, an operation section 32, and a first locking section 33. The handle 30 extends longitudinally from a first end to a second end. The joint section 31 is positioned adjacent to the first end of the handle 30. The operation section 32 is positioned adjacent to the second end of the handle 30. The first locking section 33 is located at a middle of the handle 30 between the pivot joint and the operation sections 31 and 32. The joint section 31 is pivotally connected to the operating end 12 of the shell 10 and is operatively connected to the compressing plunger 22. This connection allows the handle 30 to control the movement of the compressing plunger 22 within the cavity 13, thereby regulating the compression force applied to the at least one sealing ring 21. Upon operation of the handle 30, the compressing plunger 22 moves along the axis A10 driven by the joint section 31 to compress the at least one sealing ring 21, thereby elastically deforming the at least one sealing ring 21 between a compressed state and a recovered state. A first of two opposite sides of the handle 30 adjacent to the limiting component 40 includes a hand groove 34. The first locking section 33 is positioned on the first of two opposite sides of the handle 30. The joint section 31 comprises a cam structure with a first abutting surface 311 and a second abutting surface 312. The first and the second abutting surfaces 311 and 312 are positioned adjacent to each other and have an angle between them that is greater than 90 degrees. The first and the second abutting surfaces 311 and 312 selectively abut against the abutment surface 221 during pivotal movement of the handle 30relative to the groove 14. Further, a pivot axle 60 is located within the joint section 31, and the pivot axle 60 is positioned at a first distance d1 from the first abutting surface 311 and a second distance d2 from the second abutting surface 312, with the second distance d2 being less than the first distance d1.

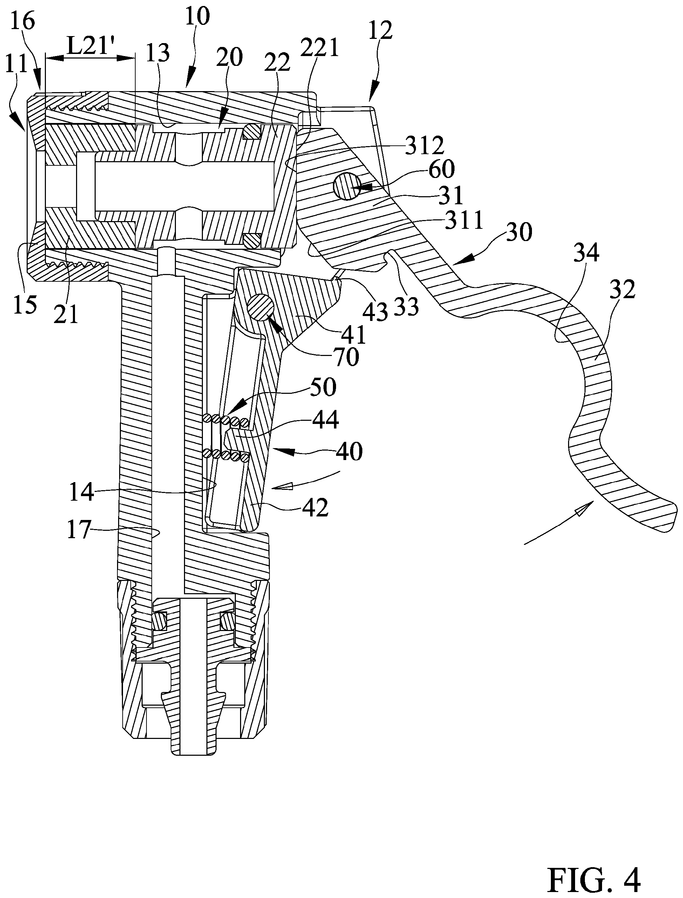

The limiting component 40 is pivotal and has a pressing section 42 and a second locking section 43. The pressing section 42 faces the hand groove 34. The second locking section 43 of the limiting component 40 is detachably engageable with the first locking section 33 of the handle 30. This engagement enables a constant compression force on the at least one sealing ring 21 during operation. The limiting component 40 is pivotally connected to the groove 14, with a joint section 41 thereof pivotally connected to the groove 14. A pivot 70 is located on the limiting component 40. The limiting component 40 allows single-handed operation and is configured to pivot about the pivot 70 between an engaging position and a disengaging position, selectively engaging the second locking section 43 with the first locking section 33. When the second locking section 43 engages the first locking section 33, the at least one sealing ring 21 is in the compressed state, thereby clamping the valve. The at least one sealing ring 21 has a compression length L21 along the axis A10 in the compressed state. When the second locking section 43 disengages from the first locking section 33, the at least one sealing ring 21 is in the recovered state and abuts against the compressing plunger 22 along the axis A10. The at least one sealing ring 21 has a recovery length L21' (as shown in FIG. 4) along the axis A10 in the recovered state greater than the compression length L21. Moreover, the limiting component 40 includes a positioning section 44 adjacent to and extending towards the groove 14 from a side of the pressing section 42.

The biasing component 50 is configured to bias the limiting component 40 and is arranged between the limiting component 40 and the shell 10. The biasing component 50 is a compression spring, with one end being retained on the positioning section 44 and the other end abutting against a bottom end of the groove 14.

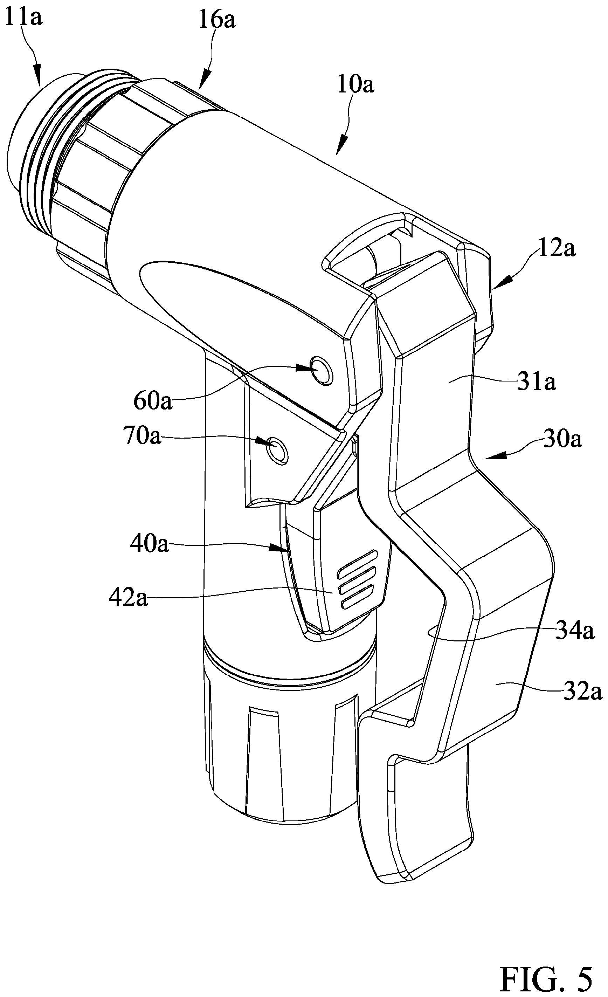

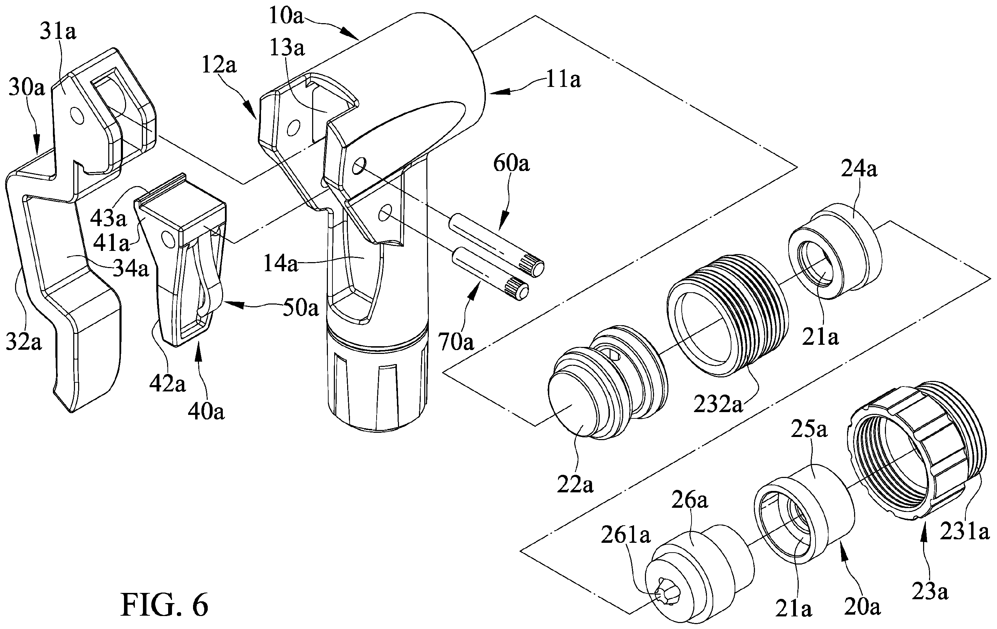

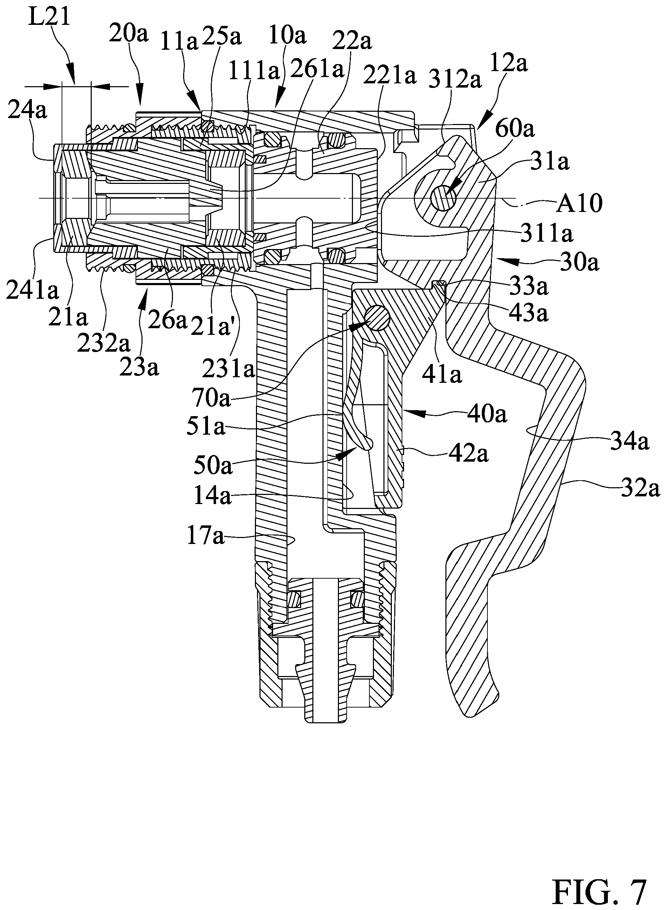

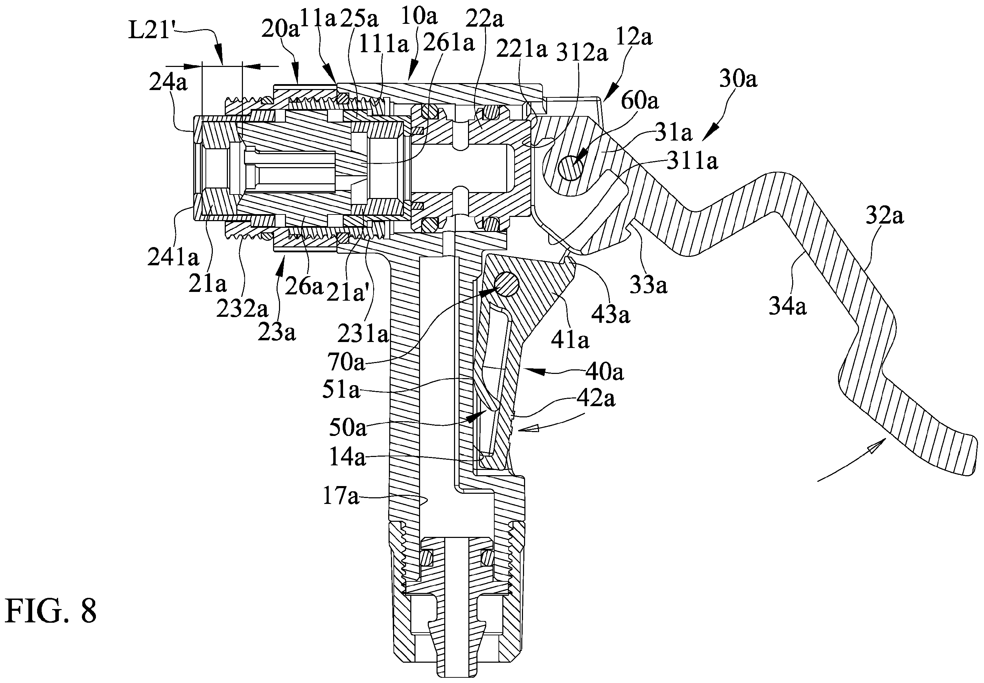

FIGS 5 to 8 show an air pump connector head in accordance with a second embodiment of the present invention, and the same numbers are used to correlate similar components of the first embodiment, but bearing a letter a. The second embodiment is modified and different from the first embodiment in that a shell 10a includes a first threaded section 111a at a connecting end 11a. A tightening mechanism 20a includes an outer shell 23a with a second threaded section 231a and a third threaded section 232a selectively engaging with the first threaded section 111a. The tightening mechanism 20a includes a first cover 24a movably positioned within the outer shell 23a. The first cover 24a includes a stop section 241a formed thereon and extending along the axis A10. The tightening mechanism 20a includes a second cover 25a movably positioned within the outer shell 23a. The tightening mechanism 20a includes a central tube 26a movably positioned within the outer shell 23a between the first and the second covers 24a and 25a. At least one sealing ring 21a is positioned within a cavity 13a and includes two sealing rings 21a and 21a' respectively positioned within the first and the second covers 24a and 25a and resiliently abutting against a central tube 26a. The sealing rings 21a and 21a' are positioned between the stop section 241a and the compressing plunger 22a. The central tube 26a has a central depressing portion 261a. A joint section 31a of a handle 30a is adapted to actuate a compressing plunger 22a to push against the second cover 25a, thereby indirectly squeezing and elastically deforming the two sealing rings 21a and 21a' the compressing plunger 22a to clamp onto the valve. The limiting component 40a incorporates a resilient biasing component 50a, which aids in maintaining constant pressure on the compressing plunger 22a. This resilient biasing ensures reliable sealing performance even under varying operating conditions, contributing to the durability and longevity of the connector head. The biasing component 50a integrally formed with a limiting component 40a and extends therefrom towards a groove 14a at an operating end 12a. The biasing component 50a is resiliently pivotal relative to the limiting component 40a in an elastic manner to bias the limiting component 40a. The biasing component 50a has a resilient abutting portion 51a abutting against a bottom the groove 14a.

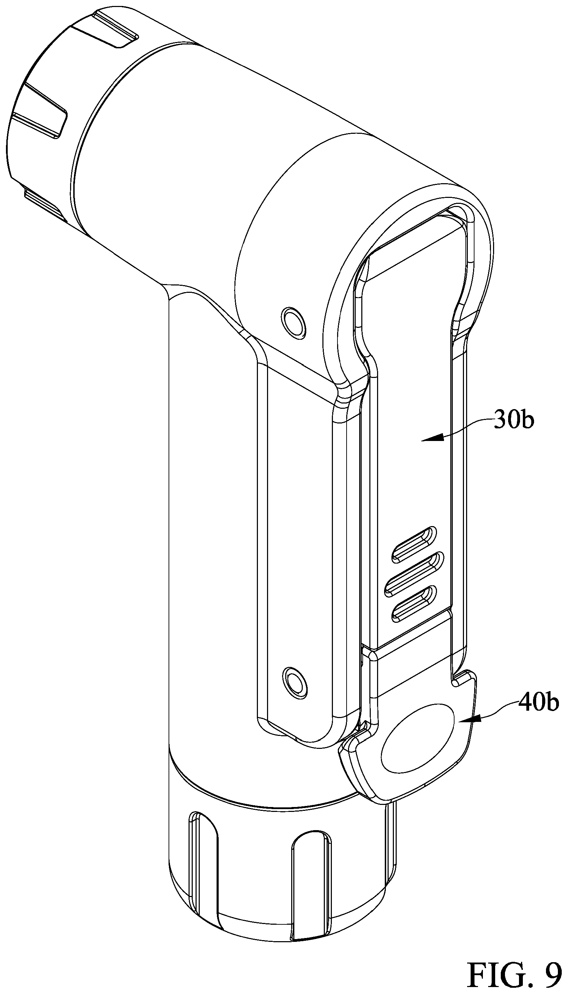

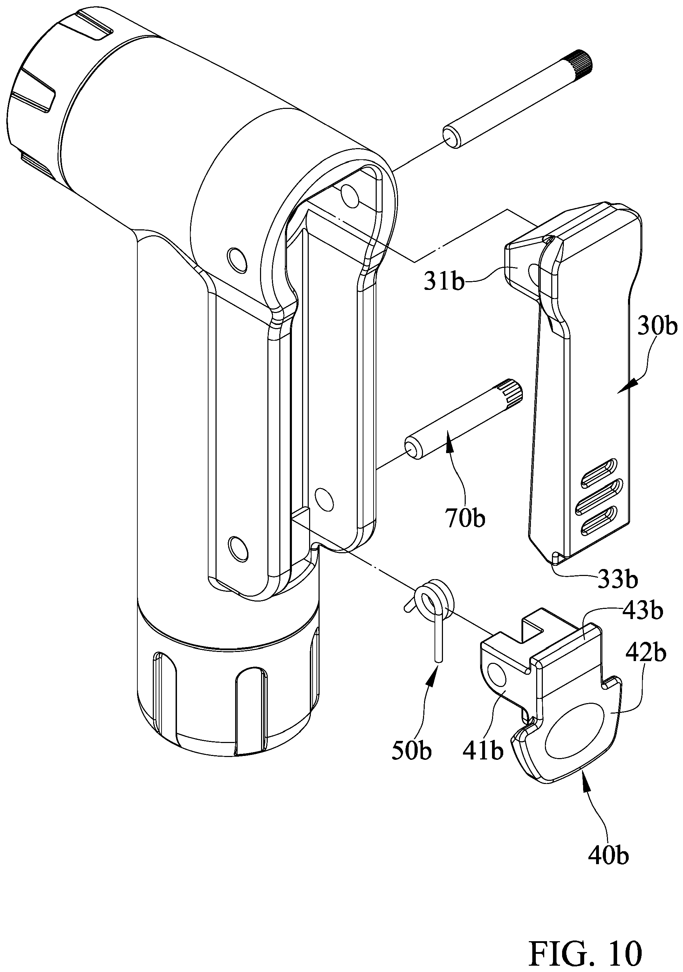

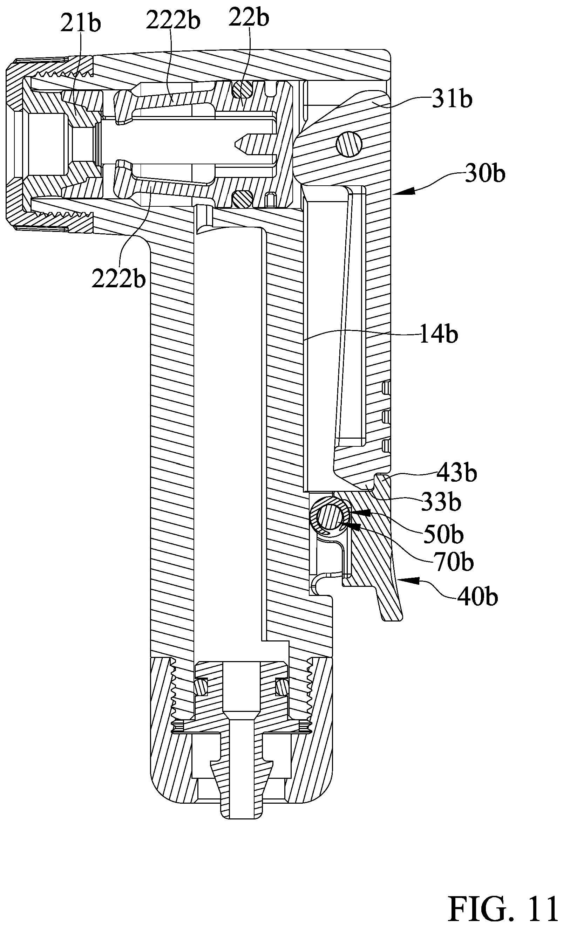

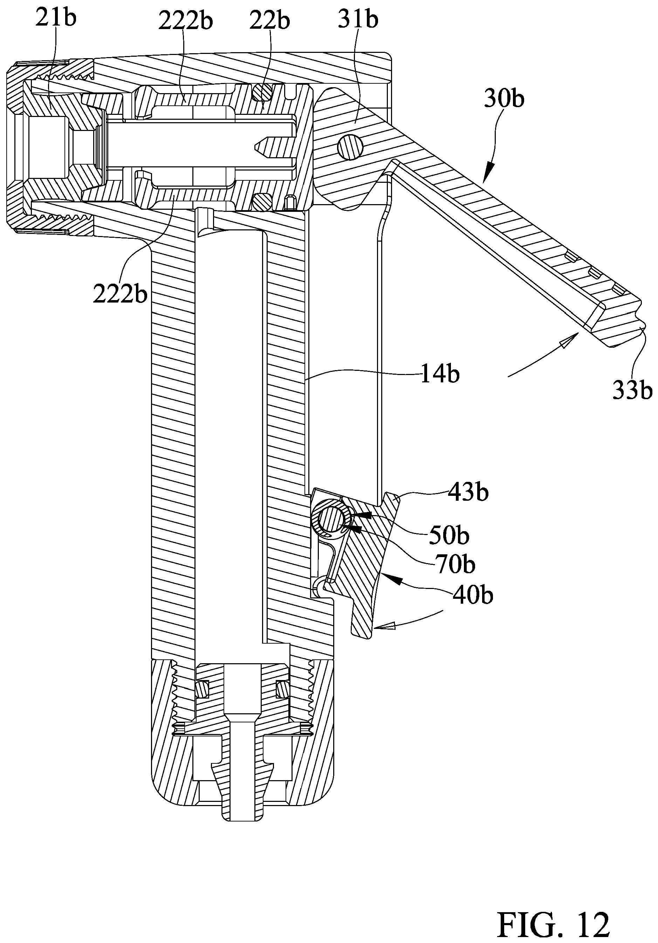

FIGS 9 to 12 show an air pump connector head in accordance with a third embodiment of the present invention, and the same numbers are used to correlate similar components of the first embodiment, but bearing a letter b. The third embodiment is modified and different from the first embodiment in that a compressing plunger 22b includes clamp arms 222b designed for radial resilience. These clamp arms 222b enable the compressing plunger 22b to apply uniform pressure around the circumference of the valve, and the compressing plunger 22b can work with at least one sealing ring 21b to clamp the valve, ensuring a tight and leak-free seal during inflation. A handle 30b extends longitudinally from a first and to a second end. A joint section 31b of the handle 30b is positioned adjacent to the first end of the handle 30b. An operation section (not numbered) of the handle 30b is positioned adjacent to the second end of the handle 30b. A first locking section 33b is positioned adjacent to the second end of the handle 30b. A second locking section 43b is positioned adjacent to a first end of a limiting component 40b, which is adjacent to the second end of the handle 30b. A biasing component 50b is a torsion spring. The biasing component 50b abuts against the limiting component 40b and a bottom end of a groove 14b. A pivot 70a is disposed between and inserted through the limiting component 40b, specifically at a joint section of the limiting component 40b, and the biasing component 50b. The limiting component 40b is configured to pivot about the pivot 70b.

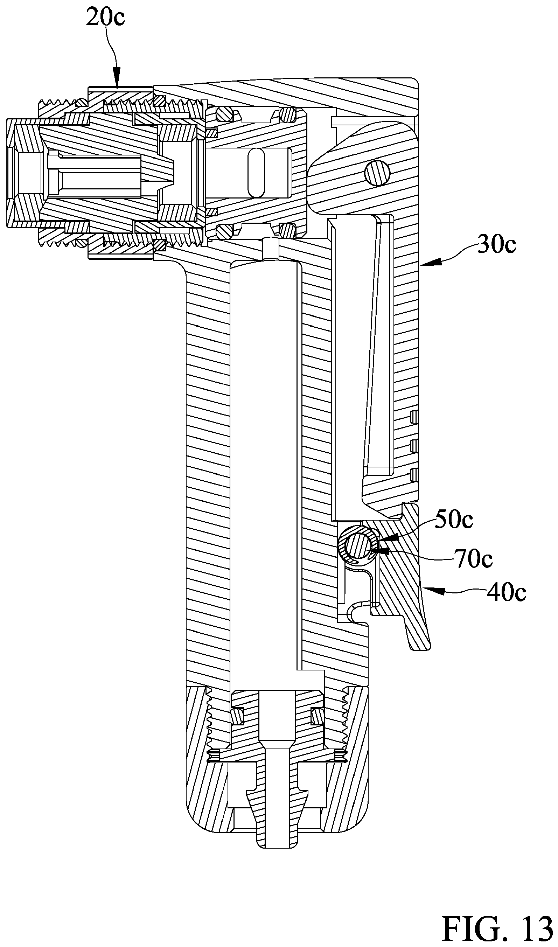

FIG 13 illustrate an air pump connector head in accordance with a fourth embodiment of the present invention, and the same numbers are used to correlate similar components of the first embodiment, but bearing a letter c. The fourth embodiment is modified from the third embodiment. Similarly, it comprises a handle 30c, a limiting component 40 c, a biasing component 50c, and a pivot 70c, all of which utilize the technology disclosed in the third embodiment as described above. The fourth embodiment is different from the third embodiment in that a tightening mechanism 20c utilizes the technology of the tightening mechanism 20a.

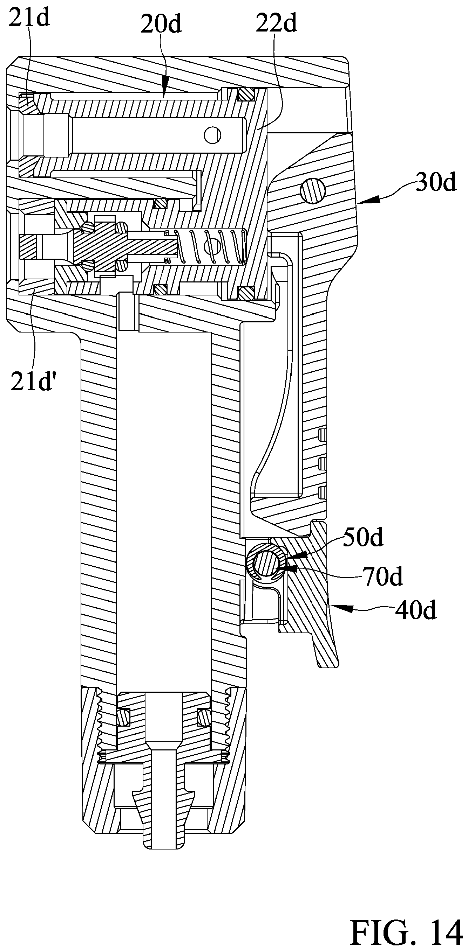

FIG 14 shows an air pump connector head in accordance with a fifth embodiment of the present invention, and the same numbers are used to correlate similar components of the first embodiment, but bearing a letter d. The fifth embodiment is modified from the third embodiment. Similarly, it comprises a handle 30d, a limiting component 40d, a biasing component 50d, and a pivot 70d, all of which utilize the technology disclosed in the

### third embodiment as described above.

The fourth embodiment is different from the third embodiment in that a tightening mechanism 20d comprises at least one sealing ring 21d and a compressing plunger 22d. The compressing plunger 22d includes a first connecting hole 223d and a second connecting hole 224d configured to accommodate different types of valves. Both the first and the second connecting holes 223d and 224d open at a first end of the compressing plunger 22d. The at least one sealing ring 21d includes two sealing rings 21d and 21d' corresponding to the first and the second connecting holes 223d and 224d. The connecting holes 223d and 224d allow the connector head to securely grip and seal valves with different stem configurations and sizes, ensuring universal compatibility.

In view of the foregoing, when the handle 30, 30a, 30b, 30c, and 30d is actuated, it causes the tightening mechanism 20, 20a, 20c, and 20d to clamp onto a valve inserted into the air pump connector head. This action squeezes the sealing rings 21, 21a, 21a', 21b, 21d, and 21d' between the compressing plunger 22, 22a, 22b, and 22d and the stop section 15, elastically deforming them to securely grip the valve and prevent leakage. Furthermore, the present invention utilizes single-handed pressing of the limiting component 40, 40a, 40b, 40c, and 40d to control the interlocking relationship between the first locking section 33, 33a, and 33b of handle 30, 30a, 30b, 30c, and 30d and the second locking section 43, 43a, and 43b of the limiting component 40, 40a, 40b, 40c, and 40d. This allows the sealing rings 21, 21a, 21a', 21b, 21d, and 21d' to switch between compressed and released states, enabling them to securely grip or release the valve as required

## Claims

1. An air pump connector head comprising:
a shell (10, 10a), wherein the shell (10, 10a) has a connecting end (11, 11a) and an operating end (12, 12a) and includes a cavity (13, 13a) extending from the connecting end (11, 11a) to the operating end (12, 12a), and
wherein the shell (10, 10a) includes an air passage (17, 17a) communicating with the cavity (13, 13a);
a stop section (15), wherein the stop section (15) is disposed at the connecting end (11, 11a);
a tightening mechanism (20, 20a, 20c, 20d), wherein the tightening mechanism (20, 20a, 20c, 20d) comprises at least one sealing ring (21, 21a, 21a', 21b, 21d, 21d') and a compressing plunger (22, 22a, 22b, 22d), wherein the at least one sealing ring (21, 21a, 21a', 21b, 21d, 21d') is arranged between the stop section (15) and the compressing plunger (22, 22a, 22b, 22d) and elastically deformable upon movement of the compressing plunger (22, 22a, 22b, 22d) to clamp a valve engaged with the air pump connector head, wherein the compressing plunger (22, 22a, 22b, 22d) is movably disposed in the cavity (13, 13a);
a handle (30, 30a, 30b, 30c, 30d), wherein the handle (30, 30a, 30b, 30c, 30d) has a joint section (31, 31a, 31b), an operation section (32, 32a), and a first locking section (33, 33a, 33b), wherein the joint section (31, 31a, 31b) is pivotally connected to the operating end (12, 12a) and operatively connected to the compressing plunger (22, 22a, 22b, 22d) to cause relative movement of the compressing plunger (22, 22a, 22b, 22d) with respect to the cavity (13, 13a), thereby elastically deforming the at least one sealing ring (21, 21a, 21a', 21b, 21d, 21d');
a limiting component (40, 40a, 40b, 40c, 40d), wherein the limiting component (40, 40a, 40b, 40c, 40d) has a pressing section (42, 42a) and a second locking section (43, 43a, 43b), wherein the second locking section (43, 43a, 43b) is detachably engageable with the first locking section (33, 33a, 33b); and
a biasing component (50, 50a, 50b, 50c, 50d), wherein the biasing component (50, 50a, 50b, 50c, 50d) is arranged between the limiting component (40, 40a, 40b, 40c, 40d) and the shell (10, 10a) configured to bias the limiting component (40, 40a, 40b, 40c, 40d).

2. The air pump connector head according to claim 1, wherein the shell (10, 10a) includes a groove (14, 14a, 14b) at the operating end (12, 12a) communicating with the cavity (13, 13a), and wherein the limiting component (40, 40a, 40b, 40c, 40d) is pivotally connected to the groove (14, 14a, 14b), with a joint section (41, 41a, 41b) thereof pivotally connected to the groove (14, 14a, 14b).

3. The air pump connector head according to claim 2, wherein the handle (30, 30a) extends longitudinally from a first end to a second end, wherein the joint section (31, 31a) of the handle (30, 30a) is positioned adjacent to the first end of the handle (30, 30a), wherein the operation section (32, 32a) of the handle (30, 30a) is positioned adjacent to the second end of the handle (30), wherein the first locking section (33, 33a) is located at a middle of the handle (30) between the pivot joint and the operation sections (31, 31a,, 32, 32a) of the handle (30, 30a), wherein a first of two opposite sides of the handle (30, 30a) adjacent to the limiting component (40, 40a) includes a hand groove (34, 34a), and wherein the hand groove (34, 34a) faces the pressing section (42, 42a), and wherein the first locking section (33, 33a) is positioned on the first of two opposite sides of the handle (30, 30a).

4. The air pump connector head according to any of claims 1 and 2, wherein the cavity (13, 13a) extends along an axis (A10) from the connecting end (11, 11a) to the operating end (12, 12a), wherein the compressing plunger (22, 22a, 22b, 22d) moves along the axis (A10) driven by the joint section (31, 31a, 31b) to compress the at least one sealing ring (21, 21a, 21a', 21b, 21d, 21d'), thereby elastically deforming the at least one sealing ring (21, 21a, 21a', 21b, 21d, 21d') between a compressed state and a recovered state, wherein when the second locking section (43, 43a, 43b) of the limiting component (40, 40a, 40b, 40c, 40d) engages the first locking section (33, 33a, 33b) of the handle (30, 30a, 30b, 30c, 30d), the at least one sealing ring (21, 21a, 21a', 21b, 21d, 21d') is in the compressed state, thereby clamping the valve, wherein the at least one sealing ring (21, 21a, 21a', 21b, 21d, 21d') has a compression length (L21) along the axis (A10) in the compressed state, wherein when the second locking section (43, 43a, 43b) of the limiting component (40, 40a, 40b, 40c, 40d) disengages from the first locking section (33, 33a, 33b) of the handle (30), the at least one sealing ring (21, 21a, 21a', 21b, 21d, 21d') is in the recovered state and abuts against the compressing plunger (22, 22a, 22b, 22d) along the axis (A10), and wherein the at least one sealing ring (21, 21a, 21a', 21b, 21d, 21d') has a recovery length (L21') along the axis (A10) in the recovered state greater than the compression length (L21).

5. The air pump connector head according to any of claims 1 and 2, wherein the compressing plunger (22, 22a, 22b, 22d) has an abutment surface (221, 221a) located adjacent to the operating end (12, 12a) abutting against the handle (30, 30a, 30b, 30c, 30d), wherein the joint section (31, 31a, 31b) of the handle (30, 30a, 30b, 30c, 30d) comprises a cam structure with a first abutting surface (311, 311a) and a second abutting surface (312, 312a), and wherein the first and the second abutting surfaces (311, 311a, 312, 312a) selectively abut against the abutment surface (221, 221a) during pivotal movement of the handle (30, 30a, 30b, 30c, 30d) relative to the groove (14, 14a, 14b).

6. The air pump connector head according to claim 5, wherein the first and the second abutting surfaces (311, 311a, 312, 312a) are positioned adjacent to each other and have an angle between them that is greater than 90 degrees.

7. The air pump connector head according to any of claims 5 and 6, further comprising a pivot axle (60, 60a) located within the joint section (31, 31a, 31b), wherein the pivot axle (60, 60a) is positioned at a first distance (d1) from the first abutting surface (311, 311a) and a second distance (d2) from the second abutting surface (312, 312a), with the second distance (d2) being less than the first distance (d1).

8. The air pump connector head according to claim 2 further comprising a pivot (70, 70a, 70b, 70c, 70d) located on the limiting component (40, 40a, 40b, 40c, 40d), wherein the limiting component (40, 40a, 40b, 40c, 40d) is configured to pivot about the pivot (70, 70a, 70b, 70c, 70d) between an engaging position and a disengaging position, selectively engaging the second locking section (43, 43a, 43b) of the limiting component (40, 40a, 40b, 40c, 40d) with the first locking section (33, 33a, 33b) of the handle (30, 30a, 30b, 30c, 30d).

9. The air pump connector head according to claims 2, wherein the limiting component (40) includes a positioning section (44) adjacent to and extending towards the groove (14) from a side of the pressing section (42), and wherein the biasing component (50) is a compression spring, with one end being retained on the positioning section (44) and the other end abutting against a bottom end of the groove (14).

10. The air pump connector head according to any of claims 1, 2 and 4, wherein the shell (10) includes a cap (16) threaded onto the connecting end (11), wherein the stop section (15) is formed on the cap (16), and wherein the at least one sealing ring (21, 21b) includes one end abutting against the stop section (15) and the other end abutting against the compressing plunger (22), thereby allowing the compressing plunger (22, 22b) to directly squeeze and elastically deform the at least one sealing ring (21, 21b) to clamp onto the valve.

11. The air pump connector head according to claim 2, wherein the biasing component (50a) is integrally formed with the limiting component (40a) and extends therefrom towards the groove (14a), wherein the biasing component (50a) is resiliently pivotal relative to the limiting component (40a) in an elastic manner to bias the limiting component (40a), and wherein the biasing component (50a) has a resilient abutting portion (51a) abutting against a bottom the groove (14a).

12. The air pump connector head according to claim 11, wherein the shell (10a) includes a first threaded section (111a) at the connecting end (11a), wherein the tightening mechanism (20a) includes an outer shell (23a) with a second threaded section (231a) and a third threaded section (232a) selectively engaging with the first threaded section (111a), wherein the tightening mechanism (20a) includes a first cover (24a) movably positioned within the outer shell (23a), wherein the first cover (24a) includes a stop section (241a) formed thereon, wherein the tightening mechanism (20a) includes a second cover (25a) movably positioned within the outer shell (23a), wherein the tightening mechanism (20a) includes a central tube (26a) movably positioned within the outer shell (23a) between the first and the second covers (24a, 25a), wherein the at least one sealing ring (21a) includes two sealing rings (21a) respectively positioned within the first and the second covers (24a, 25a) and resiliently abutting against the central tube (26a), wherein the central tube (26a) has a central depressing portion (261a), and wherein the joint section (31a) of the handle (30a) is adapted to actuate the compressing plunger (22a) to push against the second cover (25a), thereby indirectly squeezing and elastically deforming the two sealing rings (21a) the compressing plunger (22a) to clamp onto the valve.

13. The air pump connector head according to claim 8, wherein the handle (30b) extends longitudinally from a first and to a second end, wherein the joint section (31b) of the handle (30b) is positioned adjacent to the first end of the handle (30b), wherein the operation section of the handle (30b) is positioned adjacent to the second end of the handle (30b), wherein the first locking section (33b) is positioned adjacent to the second end of the handle (30b), wherein the second locking section (43b) is positioned adjacent to a first end of the limiting component (40b), which is adjacent to the second end of the handle (30b), wherein the biasing component (50b, 50c, 50d) is a torsion spring, wherein the biasing component (50b, 50c, 50d) abuts against the limiting component (40b, 40c, 40d) and a bottom end of the groove (14b), wherein the pivot (70b, 70c, 70d) is disposed between and inserted through the limiting component (40b, 40c, 40d) and the biasing component (50b, 50c, 50d), and wherein the limiting component (40b, 40c, 40d) is configured to pivot about the pivot (70b, 70c, 70d).

14. The air pump connector head according to any of claims 1, 2, 4, and 5, wherein the compressing plunger (22b) comprises a plurality of clamp arms (222b) configured to collectively grip the valve with the at least one sealing ring (21b), and wherein the plurality of clamp arms (222b) are resiliently bendable radially.

15. The air pump connector head according to any of claims 1, 2, 4, and 5, wherein the compressing plunger (22d) includes a first connecting hole (223d) and a second connecting hole (224d) configured to accommodate different types of valves, wherein both the first and the second connecting holes (223d, 224d) open at a first end of the compressing plunger (22d), and wherein the at least one sealing ring (21d) includes two sealing rings (21d, 21d') corresponding to the first and the second connecting holes (223d, 224d).

## Patentansprüche

1. Luftpumpenverbindungskopf, aufweisend:
ein Gehäuse (10, 10a), wobei das Gehäuse (10, 10a) ein Verbindungsende (11, 11a) und ein Betätigungsende (12, 12a) aufweist und einen sich vom Verbindungsende (11, 11a) zum Betätigungsende (12, 12a) erstreckenden Hohlraum (13, 13a) enthält, und wobei das Gehäuse (10, 10a) einen mit dem Hohlraum (13, 13a) kommunizierenden Luftdurchlass (17, 17a) aufweist;
einen Anschlagabschnitt (15), wobei der Anschlagabschnitt (15) am Verbindungsende (11, 11a) angeordnet ist;
einen Spannmechanismus (20, 20a, 20c, 20d), wobei der Spannmechanismus (20, 20a, 20c, 20d) mindestens einen Dichtungsring (21, 21a, 21a', 21b, 21d, 21d') und einen Druckkolben (22, 22a, 22b, 22d) aufweist, wobei der mindestens eine Dichtungsring (21, 21a, 21a', 21b, 21d, 21d') zwischen dem Anschlagabschnitt (15) und dem Druckkolben (22, 22a, 22b, 22d) angeordnet und bei einer Bewegung des Druckkolbens (22, 22a, 22b, 22d) elastisch verformbar ist, um ein mit dem Luftpumpenverbindungskopf in Eingriff stehendes Ventil festzuklemmen, wobei der Druckkolben (22, 22a, 22b, 22d) beweglich im Hohlraum (13, 13a) angeordnet ist;
einen Griff (30, 30a, 30b, 30c, 30d), wobei der Griff (30, 30a, 30b, 30c, 30d) einen Gelenkabschnitt (31, 31a, 31b), einen Betätigungsabschnitt (32, 32a) und einen ersten Verriegelungsabschnitt (33, 33a, 33b) aufweist, wobei der Gelenkabschnitt (31, 31a, 31b) schwenkbar mit dem Betätigungsende (12, 12a) verbunden und betrieblich mit dem Druckkolben (22, 22a, 22b, 22d) verbunden ist, um eine Relativbewegung des Druckkolbens (22, 22a, 22b, 22d) in Bezug auf den Hohlraum (13, 13a) zu bewirken, wodurch der mindestens eine Dichtungsring (21, 21a, 21a', 21b, 21d, 21d') elastisch verformt wird;
eine Begrenzungskomponente (40, 40a, 40b, 40c, 40d), wobei die Begrenzungskomponente (40, 40a, 40b, 40c, 40d) einen Drückabschnitt (42, 42a) und einen zweiten Verriegelungsabschnitt (43, 43a, 43b) aufweist, wobei der zweite Verriegelungsabschnitt (43, 43a, 43b) lösbar mit dem ersten Verriegelungsabschnitt (33, 33a, 33b) in Eingriff bringbar ist; und
eine Vorspannkomponente (50, 50a, 50b, 50c, 50d), wobei die Vorspannkomponente (50, 50a, 50b, 50c, 50d) zwischen der Begrenzungskomponente (40, 40a, 40b, 40c, 40d) und dem Gehäuse (10, 10a) angeordnet und dafür konfiguriert ist, die Begrenzungskomponente (40, 40a, 40b, 40c, 40d) vorzuspannen.

2. Luftpumpenverbindungskopf nach Anspruch 1, wobei das Gehäuse (10, 10a) eine Nut (14, 14a, 14b) am Betätigungsende (12, 12a) aufweist, die mit dem Hohlraum (13, 13a) kommuniziert, und wobei die Begrenzungskomponente (40, 40a, 40b, 40c, 40d) schwenkbar mit der Nut (14, 14a, 14b) verbunden ist, wobei ein Gelenkabschnitt (41, 41a, 41b) davon schwenkbar mit der Nut (14, 14a, 14b) verbunden ist.

3. Luftpumpenverbindungskopf nach Anspruch 2, wobei sich der Griff (30, 30a) in der Längsrichtung von einem ersten Ende zu einem zweiten Ende erstreckt, wobei der Gelenkabschnitt (31, 31a) des Griffs (30, 30a) benachbart zum ersten Ende des Griffs (30, 30a) angeordnet ist, wobei der Betätigungsabschnitt (32, 32a) des Griffs (30, 30a) benachbart zum zweiten Ende des Griffs (30) angeordnet ist, wobei der erste Verriegelungsabschnitt (33, 33a) in der Mitte des Griffs (30) zwischen dem Drehgelenk und den Betätigungsabschnitten (31, 31a, 32, 32a) des Griffs (30, 30a) angeordnet ist, wobei eine erste von zwei gegenüberliegenden Seiten des Griffs (30, 30a), die der Begrenzungskomponente (40, 40a) benachbart ist, eine Handnut (34, 34a) aufweist, und wobei die Handnut (34, 34a) dem Drückabschnitt (42, 42a) zugewandt ist, und wobei der erste Verriegelungsabschnitt (33, 33a) an der ersten von zwei gegenüberliegenden Seiten des Griffs (30, 30a) angeordnet ist.

4. Luftpumpenverbindungskopf nach Anspruch 1 oder 2, wobei sich der Hohlraum (13, 13a) entlang einer Achse (A10) vom Verbindungsende (11, 11a) zum Betätigungsende (12, 12a) erstreckt, wobei sich der Druckkolben (22, 22a, 22b, 22d), angetrieben durch den Gelenkabschnitt (31, 31a, 31b), entlang der Achse (A10) bewegt, um den mindestens einen Dichtungsring (21, 21a, 21a', 21b, 21d, 21d') zusammenzudrücken, wodurch der mindestens eine Dichtungsring (21, 21a, 21a', 21b, 21d, 21d') zwischen einem komprimierten Zustand und einem zurückgestellten Zustand elastisch verformt wird, wobei, wenn der zweite Verriegelungsabschnitt (43, 43a, 43b) der Begrenzungskomponente (40, 40a, 40b, 40c, 40d) mit dem ersten Verriegelungsabschnitt (33, 33a, 33b) des Griffs (30, 30a, 30b, 30c, 30d) in Eingriff steht, der mindestens eine Dichtungsring (21, 21a, 21a', 21b, 21d, 21d') sich im komprimierten Zustand befindet, wodurch das Ventil festgeklemmt wird, wobei der mindestens eine Dichtungsring (21, 21a, 21a', 21b, 21d, 21d') im komprimierten Zustand eine Kompressionslänge (L21) entlang der Achse (A10) aufweist, wobei, wenn der zweite Verriegelungsabschnitt (43, 43a, 43b) der Begrenzungskomponente (40, 40a, 40b, 40c, 40d) vom ersten Verriegelungsabschnitt (33, 33a, 33b) des Griffs (30) außer Eingriff steht, der mindestens eine Dichtungsring (21, 21a, 21a', 21b, 21d, 21d') sich im zurückgestellten Zustand befindet und am Druckkolben (22, 22a, 22b, 22d) entlang der Achse (A10) anliegt, und wobei der mindestens eine Dichtungsring (21, 21a, 21a', 21b, 21d, 21d') im zurückgestellten Zustand eine Rückstelllänge (L21') entlang der Achse (A10) aufweist, die größer ist als die Kompressionslänge (L21).

5. Luftpumpenverbindungskopf nach Anspruch 1 oder 2, wobei der Druckkolben (22, 22a, 22b, 22d) eine Anliegefläche (221, 221a) aufweist, die benachbart zum Betätigungsende (12, 12a) angeordnet ist und am Griff (30, 30a, 30b, 30c, 30d) anliegt, wobei der Gelenkabschnitt (31, 31a, 31b) des Griffs (30, 30a, 30b, 30c, 30d) eine Nockenstruktur mit einer ersten Anliegefläche (311, 311a) und einer zweiten Anliegefläche (312, 312a) aufweist, und wobei die erste und die zweite Anliegefläche (311, 311a, 312, 312a) während einer Schwenkbewegung des Griffs (30, 30a, 30b, 30c, 30d) relativ zur Nut (14, 14a, 14b) selektiv an der Anliegefläche (221, 221a) anliegen.

6. Luftpumpenverbindungskopf nach Anspruch 5, wobei die erste und die zweite Anliegefläche (311, 311a, 312, 312a) benachbart zueinander und unter einem Winkel von mehr als 90 Grad angeordnet sind.

7. Luftpumpenverbindungskopf nach Anspruch 5 oder 6, ferner aufweisend eine Schwenkachse (60, 60a), die innerhalb des Gelenkabschnitts (31, 31a, 31b) angeordnet ist, wobei die Schwenkachse (60, 60a) in einem ersten Abstand (d1) von der ersten Anliegefläche (311, 311a) und in einem zweiten Abstand (d2) von der zweiten Anliegefläche (312, 312a) angeordnet ist, wobei der zweite Abstand (d2) kleiner ist als der erste Abstand (d1).

8. Luftpumpenverbindungskopf nach Anspruch 2, ferner aufweisend einen an der Begrenzungskomponente (40, 40a, 40b, 40c, 40d) angeordneten Drehzapfen (70, 70a, 70b, 70c, 70d), wobei die Begrenzungskomponente (40, 40a, 40b, 40c, 40d) dafür konfiguriert ist, eine Schwenkbewegung um den Drehzapfen (70, 70a, 70b, 70c, 70d) zwischen einer Eingriffsposition und einer Nichteingriffsposition auszuführen, um selektiv den zweiten Verriegelungsabschnitt (43, 43a, 43b) der Begrenzungskomponente (40, 40a, 40b, 40c, 40d) mit dem ersten Verriegelungsabschnitt (33, 33a, 33b) des Griffs (30, 30a, 30b, 30c, 30d) in Eingriff zu bringen.

9. Luftpumpenverbindungskopf nach Anspruch 2, wobei die Begrenzungskomponente (40) einen Positionierungsabschnitt (44) aufweist, der benachbart zum Druckabschnitt (42) angeordnet ist und sich von einer Seite des Druckabschnitts (42) in Richtung zur Nut (14) erstreckt, und wobei die Vorspannkomponente (50) eine Druckfeder ist, deren eines Ende am Positionierungsabschnitt (44) gehalten wird und deren anderes Ende an einem unteren Ende der Nut (14) anliegt.

10. Luftpumpenverbindungskopf nach einem der Ansprüche 1, 2 und 4, wobei das Gehäuse (10) eine auf das Verbindungsende (11) aufgeschraubte Kappe (16) aufweist, wobei der Anschlagabschnitt (15) auf der Kappe (16) ausgebildet ist, und wobei der mindestens eine Dichtungsring (21, 21b) ein am Anschlagabschnitt (15) anliegendes Ende und ein am Druckkolben (22) anliegendes anderes Ende aufweist, wodurch ermöglicht wird, dass der Druckkolben (22, 22b) den mindestens einen Dichtungsring (21, 21b) direkt zusammendrücken und elastisch verformen kann, um ihn am Ventil festzuklemmen.

11. Luftpumpenverbindungskopf nach Anspruch 2, wobei die Vorspannkomponente (50a) integral mit der Begrenzungskomponente (40a) ausgebildet ist und sich von dieser in Richtung zur Nut (14a) erstreckt, wobei die Vorspannkomponente (50a) relativ zur Begrenzungskomponente (40a) auf eine elastische Weise schwenkbar ist, um die Begrenzungskomponente (40a) vorzuspannen, und wobei die Vorspannkomponente (50a) einen elastischen Anschlagabschnitt (51a) aufweist, der an einem Boden der Nut (14a) anliegt.

12. Luftpumpenverbindungskopf nach Anspruch 11, wobei das Gehäuse (10a) einen ersten Gewindeabschnitt (111a) am Verbindungsende (11a) aufweist, wobei der Spannmechanismus (20a) eine Außenhülle (23a) mit einem zweiten Gewindeabschnitt (231a) und einem dritten Gewindeabschnitt (232a) aufweist, die selektiv mit dem ersten Gewindeabschnitt (111a) in Eingriff stehen, wobei der Spannmechanismus (20a) eine erste Abdeckung (24a) aufweist, die innerhalb der Außenhülse (23a) bewegbar angeordnet ist, wobei die erste Abdeckung (24a) einen daran ausgebildeten Anschlagabschnitt (241a) aufweist, wobei der Spannmechanismus (20a) eine zweite Abdeckung (25a) aufweist, die innerhalb der Außenhülse (23a) bewegbar angeordnet ist, wobei der Spannmechanismus (20a) ein mittiges Rohr (26a) aufweist, das innerhalb der Außenhülle (23a) zwischen der ersten und der zweiten Abdeckung (24a, 25a) bewegbar angeordnet ist, wobei der mindestens eine Dichtungsring (21a) zwei Dichtungsringe (21a) aufweist, die jeweils innerhalb der ersten und der zweiten Abdeckung (24a, 25a) angeordnet sind und elastisch am mittigen Rohr (26a) anliegen, wobei das mittige Rohr (26a) einen mittigen Vertiefungsabschnitt (261a) aufweist, und wobei der Gelenkabschnitt (31a) des Griffs (30a) dazu eingerichtet ist, den Druckkolben (22a) zu betätigen, so dass er gegen die zweite Abdeckung (25a) drückt, wodurch die beiden Dichtungsringe (21a) indirekt komprimiert und elastisch verformt werden, um den Druckkolben (22a) auf das Ventil zu klemmen.

13. Luftpumpenverbindungskopf nach Anspruch 8, wobei sich der Griff (30b) in der Längsrichtung von einem ersten zu einem zweiten Ende erstreckt, wobei der Gelenkabschnitt (31b) des Griffs (30b) benachbart zum ersten Ende des Griffs (30b) angeordnet ist, wobei der Betätigungsabschnitt des Griffs (30b) benachbart zum zweiten Ende des Griffs (30b) angeordnet ist, wobei der erste Verriegelungsabschnitt (33b) benachbart zum zweiten Ende des Griffs (30b) angeordnet ist, wobei der zweite Verriegelungsabschnitt (43b) benachbart zu einem ersten Ende des Begrenzungselements (40b) angeordnet ist, das benachbart zum zweiten Ende des Griffs (30b) angeordnet ist, wobei die Vorspannkomponente (50b, 50c, 50d) eine Torsionsfeder ist, wobei die Vorspannkomponente (50b, 50c, 50d) an der Begrenzungskomponente (40b, 40c, 40d) und an einem unteren Ende der Nut (14b) anliegt, wobei der Drehzapfen (70b, 70c, 70d) zwischen der Begrenzungskomponente (40b, 40c, 40d) und der Vorspannkomponente (50b, 50c, 50d) angeordnet und durch diese hindurchgeführt ist, und wobei die Begrenzungskomponente (40b, 40c, 40d) dafür konfiguriert ist, eine Schwenkbewegung um den Drehzapfen (70b, 70c, 70d) auszuführen.

14. Luftpumpenverbindungskopf nach einem der Ansprüche 1, 2, 4 und 5, wobei der Druckkolben (22b) eine Vielzahl von Klemmarmen (222b) aufweist, die dafür konfiguriert sind, das Ventil mit dem mindestens einen Dichtungsring (21b) gemeinsam zu greifen, und wobei die Vielzahl von Klemmarmen (222b) radial elastisch biegbar sind.

15. Luftpumpenverbindungskopf nach einem der Ansprüche 1, 2, 4 und 5, wobei der Druckkolben (22d) ein erstes Verbindungsloch (223d) und ein zweites Verbindungsloch (224d) aufweist, die dafür konfiguriert sind, verschiedene Typen von Ventilen aufzunehmen, wobei sowohl das erste als auch das zweite Verbindungsloch (223d, 224d) sich an einem ersten Ende des Drucckolbens (22d) öffnen, und wobei der mindestens eine Dichtungsring (21d) zwei Dichtungsringe (21d, 21d') aufweist, die dem ersten und dem zweiten Verbindungsloch (223d, 224d) entsprechen.

## Revendications

1. Tête de raccord de pompe à air comprenant :
une enveloppe (10, 10a), dans laquelle l'enveloppe (10, 10a) a une extrémité de raccordement (11, 11a) et une extrémité de fonctionnement (12, 12a) et inclut une cavité (13, 13a) s'étendant depuis l'extrémité de raccordement (11, 11a) jusqu'à l'extrémité de fonctionnement (12, 12a), et dans laquelle l'enveloppe (10, 10a) inclut un passage d'air (17, 17a) communiquant avec la cavité (13, 13a) ;
une section d'arrêt (15), dans laquelle la section d'arrêt (15) est disposée au niveau de l'extrémité de raccordement (11, 11a) ;
un mécanisme de serrage (20, 20a, 20c, 20d), dans laquelle le mécanisme de serrage (20, 20a, 20c, 20d) comprend au moins une bague d'étanchéité (21, 21a, 21a', 21b, 21d, 21d') et un piston de compression (22, 22a, 22b, 22d), dans laquelle l'au moins une bague d'étanchéité (21, 21a, 21a', 21b, 21d, 21d') est agencée entre la section d'arrêt (15) et le piston de compression (22, 22a, 22b, 22d) et peut être déformée de manière élastique lors du mouvement du piston de compression (22, 22a, 22b, 22d) pour serrer une soupape en prise avec la tête de raccord de pompe à air, dans laquelle le piston de compression (22, 22a, 22b, 22d) est disposé de manière mobile dans la cavité (13, 13a) ;
une poignée (30, 30a, 30b, 30c, 30d), dans laquelle la poignée (30, 30a, 30b, 30c, 30d) a une section de jointure (31, 31a, 31b), une section de fonctionnement (32, 32a) et une première section de verrouillage (33, 33a, 33b), dans laquelle la section de jointure (31, 31a, 31b) est raccordée de manière pivotante à l'extrémité de fonctionnement (12, 12a) et raccordée de manière fonctionnelle au piston de compression (22, 22a, 22b, 22d) pour amener un mouvement relatif du piston de compression (22, 22a, 22b, 22d) par rapport à la cavité (13, 13a), déformant ainsi de manière élastique l'au moins une bague d'étanchéité (21, 21a, 21a', 21b, 21d, 21d') ;
un élément de limitation (40, 40a, 40b, 40c, 40d), dans laquelle l'élément de limitation (40, 40a, 40b, 40c, 40d) a une section de pression (42, 42a) et une seconde section de verrouillage (43, 43a, 43b), dans laquelle la seconde section de verrouillage (43, 43a, 43b) peut venir en prise de manière détachable avec la première section de verrouillage (33, 33a, 33b) ; et
un élément de déviation (50, 50a, 50b, 50c, 50d), dans lequel l'élément de déviation (50, 50a, 50b, 50c, 50d) est agencé entre l'élément de limitation (40, 40a, 40b, 40c, 40d) et l'enveloppe (10, 10a) et conçu pour dévier l'élément de limitation (40, 40a, 40b, 40c, 40d).

2. Tête de raccord de pompe à air selon la revendication 1, dans laquelle l'enveloppe (10, 10a) inclut une rainure (14, 14a, 14b) au niveau de l'extrémité de fonctionnement (12, 12a) communiquant avec la cavité (13, 13a), et dans laquelle l'élément de limitation (40, 40a, 40b, 40c, 40d) est raccordé de manière pivotante à la rainure (14, 14a, 14b), avec une section de jointure (41, 41a, 41b) de celui-ci raccordée de manière pivotante à la rainure (14, 14a, 14b).

3. Tête de raccord de pompe à air selon la revendication 2, dans laquelle la poignée (30, 30a) s'étend de manière longitudinale depuis une première extrémité jusqu'à une seconde extrémité, dans laquelle la section de jointure (31, 31a) de la poignée (30, 30a) est positionnée de manière adjacente à la première extrémité de la poignée (30, 30a), dans laquelle la section de fonctionnement (32, 32a) de la poignée (30, 30a) est positionnée de manière adjacente à la seconde extrémité de la poignée (30), dans laquelle la première section de verrouillage (33, 33a) est située au niveau d'un milieu de la poignée (30) entre les sections de jointure pivot et de fonctionnement (31, 31a, 32, 32a) de la poignée (30, 30a), dans laquelle un premier des deux côtés opposés de la poignée (30, 30a) adjacent à l'élément de limitation (40, 40a) inclut une rainure à main (34, 34a), et dans laquelle la rainure à main (34, 34a) fait face à la section de pression (42, 42a), et dans laquelle la première section de verrouillage (33, 33a) est positionnée sur le premier des deux côtés opposés de la poignée (30, 30a).

4. Tête de raccord de pompe à air selon l'une quelconque des revendications 1 et 2, dans laquelle la cavité (13, 13a) s'étend le long d'un axe (A10) depuis l'extrémité de raccordement (11, 11a) jusqu'à l'extrémité de fonctionnement (12, 12a), dans laquelle le piston de compression (22, 22a, 22b, 22d) se déplace le long de l'axe (A10) entraîné par la section de jointure (31, 31a, 31b) pour comprimer l'au moins une bague d'étanchéité (21, 21a, 21a', 21b, 21d, 21d'), déformant ainsi élastiquement l'au moins une bague d'étanchéité (21, 21a, 21a', 21b, 21d, 21d') entre un état comprimé et un état récupéré, dans laquelle lorsque la seconde section de verrouillage (43, 43a, 43b) de l'élément de limitation (40, 40a, 40b, 40c, 40d) vient en prise avec la première section de verrouillage (33, 33a, 33b) de la poignée (30, 30a, 30b, 30c, 30d), l'au moins une bague d'étanchéité (21, 21a, 21a', 21b, 21d, 21d') se trouve dans l'état comprimé, serrant ainsi la soupape, dans laquelle l'au moins une bague d'étanchéité (21, 21a, 21a', 21b, 21d, 21d') a une longueur de compression (L21) le long de l'axe (A10) dans l'état comprimé, dans laquelle lorsque la seconde section de verrouillage (43, 43a, 43b) de l'élément de limitation (40, 40a, 40b, 40c, 40d) se dégage de la première section de verrouillage (33, 33a, 33b) de la poignée (30), l'au moins une bague d'étanchéité (21, 21a, 21a', 21b, 21d, 21d') se trouve dans l'état récupéré et vient en butée contre le piston de compression (22, 22a, 22b, 22d) le long de l'axe (A10), et dans laquelle l'au moins une bague d'étanchéité (21, 21a, 21a', 21b, 21d, 21d') a une longueur de récupération (L21') le long de l'axe (A10) dans l'état récupéré supérieure à la longueur de compression (L21).

5. Tête de raccord de pompe à air selon l'une quelconque des revendications 1 et 2, dans laquelle le piston de compression (22, 22a, 22b, 22d) a une surface de réception de butée (221, 221a) située de manière adjacente à l'extrémité de fonctionnement (12, 12a) en butée contre la poignée (30, 30a, 30b, 30c, 30d), dans laquelle la section de jointure (31, 31a, 31b) de la poignée (30, 30a, 30b, 30c, 30d) comprend une structure de came avec une première surface de butée (311, 311a) et une seconde surface de butée (312, 312a), et dans laquelle la première et la seconde surface de butée (311, 311a, 312, 312a) viennent sélectivement en butée contre la surface de réception de butée (221, 221a) pendant le mouvement pivotant de la poignée (30, 30a, 30b, 30c, 30d) par rapport à la rainure (14, 14a, 14b).

6. Tête de raccord de pompe à air selon la revendication 5, dans laquelle la première et la seconde surface de butée (311, 311a, 312, 312a) sont positionnées de manière adjacente l'une à l'autre et forment un angle entre elles qui est supérieur à 90 degrés.

7. Tête de raccord de pompe à air selon l'une quelconque des revendications 5 et 6, comprenant en outre un essieu pivot (60, 60a) situé au sein de la section de jointure (31, 31a, 31b), dans laquelle l'essieu pivot (60, 60a) est positionné à une première distance (d1) depuis la première surface de butée (311, 311a) et une seconde distance (d2) depuis la seconde surface de butée (312, 312a), la seconde distance (d2) étant inférieure à la première distance (d1).

8. Tête de raccord de pompe à air selon la revendication 2 comprenant en outre un pivot (70, 70a, 70b, 70c, 70d) situé sur l'élément de limitation (40, 40a, 40b, 40c, 40d), dans lequel l'élément de limitation (40, 40a, 40b, 40c, 40d) est conçu pour pivoter autour du pivot (70, 70a, 70b, 70c, 70d) entre une position de prise et une position de dégagement, venant sélectivement en prise avec la seconde section de verrouillage (43, 43a, 43b) de l'élément de limitation (40, 40a, 40b, 40c, 40d) avec la première section de verrouillage (33, 33a, 33b) de la poignée (30, 30a, 30b, 30c, 30d).

9. Tête de raccord de pompe à air selon les revendications 2, dans laquelle l'élément de limitation (40) inclut une section de positionnement (44) adjacente à et s'étendant vers la rainure (14) depuis un côté de la section de pression (42), et dans laquelle l'élément de déviation (50) est un ressort de compression, l'une des extrémités étant retenue sur la section de positionnement (44) et l'autre extrémité venant en butée contre une extrémité de fond de la rainure (14).

10. Tête de raccord de pompe à air selon l'une quelconque des revendications 1, 2 et 4, dans laquelle l'enveloppe (10) inclut un capuchon (16) fileté sur l'extrémité de raccordement (11), dans laquelle la section d'arrêt (15) est formée sur le capuchon (16), et dans laquelle l'au moins une bague d'étanchéité (21, 21b) inclut une extrémité en butée contre la section d'arrêt (15) et l'autre extrémité en butée contre le piston de compression (22), permettant ainsi au piston de compression (22, 22b) de pincer directement et de déformer de manière élastique l'au moins une bague d'étanchéité (21, 21b) pour se serrer sur la soupape.

11. Tête de raccord de pompe à air selon la revendication 2, dans laquelle l'élément de déviation (50a) est façonné de manière intégrale avec l'élément de limitation (40a) et s'étend depuis celui-ci vers la rainure (14a), dans laquelle l'élément de déviation (50a) est pivotant de manière résiliente par rapport à l'élément de limitation (40a) d'une manière élastique pour dévier l'élément de limitation (40a), et dans laquelle l'élément de déviation (50a) a une partie de butée résiliente (51a) en butée contre un fond de la rainure (14a).

12. Tête de raccord de pompe à air selon la revendication 11, dans laquelle l'enveloppe (10a) inclut une première section filetée (111a) au niveau de l'extrémité de raccordement (11a), dans laquelle le mécanisme de serrage (20a) inclut une enveloppe externe (23a) avec une deuxième section filetée (231a) et une troisième section filetée (232a) venant sélectivement en prise avec la première section filetée (111a), dans laquelle le mécanisme de serrage (20a) inclut un premier couvercle (24a) positionné de manière mobile au sein de l'enveloppe externe (23a), dans laquelle le premier couvercle (24a) inclut une section d'arrêt (241a) formée sur celui-ci, dans laquelle le mécanisme de serrage (20a) inclut un second couvercle (25a) positionné de manière mobile au sein de l'enveloppe externe (23a), dans laquelle le mécanisme de serrage (20a) inclut un tube central (26a) positionné de manière mobile au sein de l'enveloppe externe (23a) entre le premier et le second couvercle (24a, 25a), dans laquelle l'au moins une bague d'étanchéité (21a) inclut deux bagues d'étanchéité (21a) respectivement positionnées au sein du premier et du second couvercle (24a, 25a) et en butée de manière résiliente contre le tube central (26a), dans laquelle le tube central (26a) a une partie de dépression centrale (261a), et dans laquelle la section de jointure (31a) de la poignée (30a) est adaptée pour actionner le piston de compression (22a) afin de pousser contre le second couvercle(25a), pinçant indirectement et déformant de manière élastique ainsi les deux bagues d'étanchéité (21a) du piston de compression (22a) pour le serrer sur la soupape.

13. Tête de raccord de pompe à air selon la revendication 8, dans laquelle la poignée (30b) s'étend de manière longitudinale depuis une première et jusqu'à une seconde extrémité, dans laquelle la section de jointure (31b) de la poignée (30b) est positionnée de manière adjacente à la première extrémité de la poignée (30b), dans laquelle la section de fonctionnement de la poignée (30b) est positionnée de manière adjacente à la seconde extrémité de la poignée (30b), dans laquelle la première section de verrouillage (33b)est positionnée de manière adjacente à la seconde extrémité de la poignée (30b), dans laquelle la seconde section de verrouillage (43b) est positionnée de manière adjacente à une première extrémité de l'élément de limitation (40b), qui est adjacent à la seconde extrémité de la poignée (30b), dans laquelle l'élément de déviation (50b, 50c, 50d) est un ressort de torsion, dans laquelle l'élément de déviation (50b, 50c, 50d) vient en butée contre l'élément de limitation (40b, 40c, 40d) et une extrémité de fond de la rainure (14b), dans laquelle le pivot (70b, 70c, 70d) est disposé entre et inséré à travers l'élément de limitation(40b, 40c, 40d) et l'élément de déviation (50b, 50c, 50d), et dans laquelle l'élément de limitation (40b, 40c, 40d) est conçu pour pivoter autour du pivot (70b, 70c, 70d).

14. Tête de raccord de pompe à air selon l'une quelconque des revendications 1, 2, 4 et 5, dans laquelle le piston de compression (22b) comprend une pluralité de bras de serrage (222b) conçus pour agripper collectivement la soupape avec au moins une bague d'étanchéité (21b), et dans laquelle la pluralité de bras de serrage (222b) peuvent être pliés dans la direction radiale de manière résiliente.

15. Tête de raccord de pompe à air selon l'une quelconque des revendications 1, 2, 4 et 5, dans laquelle le piston de compression (22d) inclut un premier orifice de raccordement (223d) et un second orifice de raccordement (224d) conçus pour accueillir différents types de soupape, dans laquelle à la fois le premier et le second orifice de raccordement (223d, 224d) s'ouvrent au niveau d'une première extrémité du piston de compression (22d), et dans laquelle l'au moins une bague d'étanchéité (21d) inclut deux bagues d'étanchéité (21d, 21d') correspondant au premier et au second orifice de raccordement (223d, 224d).
